# FASCICULE DE BREVET EUROPEEN

(11) **EP 3 694 309 B1**
(45) Date de publication et mention de la délivrance du brevet: **17.09.2025**
(21) Numéro de dépôt: 18808416.4
(22) Date de dépôt: 09.10.2018
(51) Int. Cl.: A01K 1/01, B65G 15/60, B65G 15/08

(54) **INSTALLATION DE CONVOYAGE CONVENANT POUR LE TRANSPORT DE MATIERES**
FÖRDERSYSTEM FÜR DEN TRANSPORT VON MATERIALIEN
CONVEYOR SYSTEM SUITABLE FOR TRANSPORTING MATERIALS

(30) Priorité: 10.10.2017 FR 1759483
(43) Date de publication de la demande: 19.08.2020
(73) Titulaire: Jarousseau, Yves, 62217 Beaurains (FR)
(72) Inventeur: Jarousseau, Yves, 62217 Beaurains (FR)
(74) Mandataire: Plasseraud IP
(86) Numéro de dépôt international: PCT/FR2018/052491
(87) Numéro de publication internationale: WO 2019/073164

(56) Documents cités:
- DE-A1- 102013 223 853
- NL-A- 7 903 449
- US-A- 2 358 609
- US-A- 2 460 894

## Description

L'invention est relative à une installation convenant pour le transport de matière et trouve une application particulière lorsqu'un convoyeur à bande est situé au-dessous du sol. Le sol peut être éventuellement celui d'un bâtiment destiné au logement des animaux.

Aussi décrit est un (premier) kit convenant pour la réalisation d'une telle installation : ce kit permet avantageusement la fabrication des parois latérales d'une telle installation, essentiellement par assemblage de modules préfabriqués du kit. En alternative d'une fabrication à partir de modules préfabriqués, l'invention concerne encore un procédé de fabrication d'une installation conforme à l'invention reposant sur le coulage de béton sur site.

Avantageusement l'invention concerne encore un kit qui facilitera la mise en œuvre du procédé selon l'invention comprenant, de manière notable, des enveloppes plastiques qui serviront avantageusement d'éléments de coffrage lors de la fabrication (lors du coulage et du moulage des parois en béton), et qui seront avantageusement conservées à demeure pour former une paroi de finition de l'enceinte de convoyage.

L'invention trouve son origine des installations convenant pour l'évacuation d'excréments d'origine animale, à savoir non limitativement l'évacuation des excréments d'élevage bovins, ovins, porcins, de poules ou autres ou encore par exemple l'évacuation des excréments de chevaux.

L'installation selon l'invention trouvera ainsi une application particulière dans un bâtiment, tel qu'une étable, un poulailler, une bergerie, une écurie...

Toutefois l'invention ne sera pas limitée à cette application, l'installation de convoyage pouvant trouver d'autres applications, et par exemple pour le transport de matière dans l'industrie.

L'état de la technique connaît ainsi d'équiper les bâtiments servant au logement des animaux d'un convoyeur situé sous le niveau du sol où logent les animaux. Les excréments chutent par gravité sur la bande du convoyeur, la bande convoyeuse permettant ensuite l'évacuation des déchets jusqu'à une zone de stockage.

Une telle installation de convoyage facilite l'entretien et participe à une meilleure hygiène des locaux. La construction d'une telle installation nécessite bien souvent la réalisation d'une tranchée, puis la réalisation de paroi en béton, ou maçonné pour la sécurisation de la tranchée. Il est ensuite nécessaire d'assembler les différents éléments de structure du convoyeur à bandes, avec la présence d'un châssis porteur, typiquement métallique, ce châssis supportant les éléments de guidage tels que des rouleaux ou autres éléments équivalents convenant pour le guidage et le soutien de la bande convoyeuse souple, ces rouleaux de guidage ou équivalent étant disposés transversalement et répartis sur la longueur de la structure du châssis.

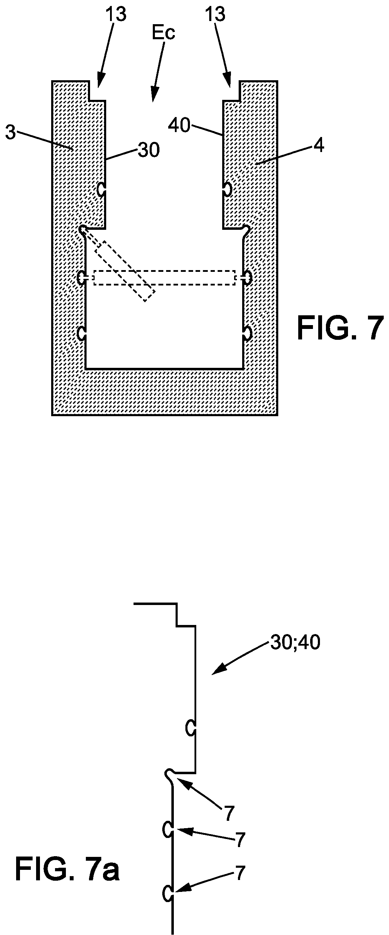

Un tel état de la technique est par exemple divulgué par le document WO 03/103383 qui décrit un convoyeur destiné pour l'évacuation des excréments d'élevage de poules et qui nécessite une structure de châssis, illustrée aux figures 7 et 8 de cette antériorité.

Selon les constatations de l'inventeur, la réalisation d'une telle installation de convoyage est complexe et onéreuse en ce qu'elle nécessite non seulement des opérations d'excavation pour la réalisation de tranchée, des opérations de maçonnerie pour la réalisation des parois notamment latérales de la tranchée, mais encore l'assemblage d'une structure de châssis reposant sur le fond de l'enceinte de convoyage, cette opération étant rendue fastidieuse, notamment en raison de l'exiguïté de la cavité formée par cette enceinte.

On connait encore du document DE 10 2013 223 853 A1 une installation de convoyage comprenant une enceinte de convoyage réalisée à partir de modules préfabriqués en béton, ainsi qu'un convoyeur présentant une bande convoyeur reçue dans ladite enceinte de convoyage. Un rouleau support de la bande convoyeuse est fixé aux parois latérales dans des insert reçus dans le béton, et l'installation comprend des moyens de fixation amovibles entre les inserts et le rouleau.

Le but de la présente invention est de pallier les inconvénients précités en proposant une installation de convoyage à parois latérales en béton formant enceinte de convoyage, de conception simplifiée et de mise en œuvre aisée par comparaison à l'état de la technique précité.

Un autre but de la présente invention est de proposer un kit convenant pour la réalisation d'une telle installation à partir de modules préfabriqués béton.

Encore, un autre but de la présente invention est de proposer un procédé de fabrication d'une telle installation, par coulage de béton sur site.

Encore, un autre but de la présente invention est de proposer un kit comprenant des enveloppes plastiques portant des inserts de fixation, et qui facilitera grandement la mise en œuvre d'un procédé de fabrication par coulage de béton sur site.

D'autres buts et avantages apparaîtront au cours de la description qui va suivre qui n'est donnée qu'à titre indicatif et qui n'a pas pour but de la limiter.

L'invention est relative à une installation convenant pour le transport de matières comprenant :
- des parois latérales en béton, voire une paroi de fond joignant les parois latérales formant entre elles une enceinte de convoyage,
- un convoyeur à bande ménagé dans ladite enceinte de convoyage, ledit convoyeur présentant une bande convoyeuse, souple, et un ou plusieurs éléments de guidage convenant pour le guidage et/ou le soutien de la bande convoyeuse, les éléments de guidage présentant des arbres support.

Selon l'invention, ladite installation comprend :
- des inserts de fixation noyés dans le béton des parois latérales selon une première possibilité, ou encore des cavités de fixation creusées dans la masse des parois latérales, selon une seconde possibilité, les extrémités longitudinales des arbres étant reçues dans les inserts selon la première possibilité, ou encore dans les cavités de fixation selon la seconde possibilité,
- des moyens de fixation amovibles entre, d'une part, les inserts de fixation selon la première possibilité, ou les cavités de fixation selon la seconde possibilité, et d'autre part, les arbres support, lesdits moyens de fixations amovibles étant configurés pour assurer la fixation des arbres support des éléments de guidage aux inserts de fixation, prédisposés dans les parois latérales en béton selon la première possibilité, ou encore assurer la fixation des arbres support des éléments de guidage aux cavités de fixation selon la seconde possibilité, ou inversement le retrait des arbres support des inserts de fixation selon la première possibilité, ou encore le retrait des arbres support des cavités de fixation, selon la seconde possibilité.

De manière notable également, la section supérieure de l'enceinte de convoyage présente un écartement entre les parois latérales, inférieur à l'écartement des parois latérales portant les inserts ou les cavités de fixation servant à la fixation des éléments de guidage de la bande convoyeuse, la section supérieure de l'enceinte de convoyage étant configurée pour former un conduit, de largeur inférieure à la bande convoyeuse, et centrée par rapport à l'axe longitudinal de la bande, des bavettes s'étendant respectivement à partir des deux parois latérales de la section supérieure vers le bas, en réalisant une étanchéité avec les bords longitudinaux du brin supérieur de la bande convoyeuse.

Selon des caractéristiques optionnelles de l'invention, prises seules ou en combinaison :
- les éléments de guidage comprennent des éléments de guidage sensiblement horizontaux, les deux extrémités de l'arbre support de chacun des éléments de guidage horizontaux étant reçues de manière amovible, dans deux des inserts appartenant aux deux parois latérales selon la première possibilité, ou encore dans deux cavités de fixation, selon la seconde possibilité ;
- ledit arbre support de l'élément de guidage horizontal est télescopique, pouvant passer d'une position déployée configurée pour assurer la fixation des deux extrémités longitudinales de l'arbre support, respectivement dans deux des inserts de fixation appartenant aux deux parois latérales selon la première possibilité, ou encore respectivement dans deux cavités de fixation des deux parois latérales selon la seconde possibilité, vers une position rétractée convenant pour dégager les extrémités longitudinales de l'arbre support des inserts de fixation selon la première possibilité, ou dégager les extrémités longitudinales de l'arbre support des cavités latérales selon la seconde possibilité, permettant ainsi le retrait de l'élément de guidage, ledit arbre support présentant un moyen de verrouillage dans sa position déployée ;
- ledit arbre support télescopique comprend deux sections tubulaires télescopiques, présentant des orifices appartenant aux deux sections tubulaires qui sont configurées pour être en regard dans ladite position déployée de l'arbre support, le moyen de verrouillage étant configuré pour traverser les orifices en regard pour assurer le verrouillage de l'arbre support dans ladite position déployée ;
- les deux sections tubulaires comprennent respectivement un tube intérieur et un tube extérieur, les moyens de verrouillage comprennent deux plots traversant les orifices dudit tube intérieur, ainsi qu'une lame ressort contraignant les plots à s'écarter l'un de l'autre, le moyen de verrouillage étant intérieur au tube intérieur configuré de manière à assurer le verrouillage automatique de la position déployée lorsque les orifices du tube intérieur sont mis en regard avec les orifices du tube extérieur, les plots traversant les orifices du tube intérieur étant contraints automatiquement par la lame ressort à pénétrer simultanément les orifices du tube extérieur.

Selon un mode de réalisation, ledit arbre support de l'élément de guidage horizontal est configuré pour assurer la fixation des deux extrémités longitudinales de l'arbre support respectivement dans deux inserts de fixation appartenant aux deux parois latérales selon la première possibilité, ou encore configuré pour assurer la fixation des deux extrémités longitudinales de l'arbre support respectivement dans deux cavités de fixation appartenant aux deux parois latérales et dans lequel au moins l'un des deux inserts de fixation selon la première possibilité, ou au moins l'une des deux cavités latérales comprend une rainure d'engagement et une rainure de blocage configurées de manière à permettre :
- l'insertion de l'extrémité longitudinale de l'arbre support dans la rainure d'engagement de l'un des deux inserts selon la première possibilité ou l'une des deux cavités de fixation selon la seconde possibilité, ledit arbre support alors en biais, non perpendiculaire à la paroi latérale, et alors que l'autre extrémité longitudinale de l'arbre support est prédisposée dans l'autre insert de la paroi latérale opposée selon la première possibilité, ou prédisposée dans la cavité de fixation de la paroi latérale opposée selon la seconde possibilité, puis,
- le coulissement de l'extrémité longitudinale le long de la rainure d'engagement et jusqu'au blocage de l'extrémité dans la rainure de blocage.

Selon des caractéristiques optionnelles de l'invention, prises seules ou en combinaison :
- des éléments de guidage inclinés par rapport à l'horizontal et coopérant avec la bande afin de relever ses bords longitudinaux, l'arbre support de l'élément de guidage étant incliné et maintenu en porte à faux, solidaire d'un insert d'une paroi latérale ;
- l'installation présentant des inserts selon la première possibilité et dans laquelle les moyens de fixation amovibles entre l'arbre support de l'élément de guidage incliné sont des moyens de vissage entre l'arbre support et l'insert, ou encore une fixation baïonnette ;
- les inserts sont en métal, en plastique ou en résine ;
- les inserts sont entièrement noyés dans le béton des parois latérales, sans partie saillante de la paroi latérale ;
- les surfaces intérieures des parois latérales en béton formant l'enceinte de convoyage sont recouvertes d'une enveloppe plastique ;
- les inserts de fixation sont formés par les enveloppes plastiques, par des conformations locales de cette dernière, ou encore les inserts de fixation sont formés par des éléments, distincts des enveloppes plastiques, solidarisés aux enveloppes plastiques.

L'invention concerne encore un procédé pour la réalisation d'une installation selon l'invention, à partir d'un kit comprenant :
- une bande convoyeuse,
- un ensemble d'éléments de guidage comprenant chacun un arbre support,
- un ensemble de modules préfabriqués en béton configurés pour la construction des parois latérales destinées à former l'enceinte de convoyage, voire même de la paroi de fond de ladite enceinte, les modules préfabriqués en béton destinés à la réalisation des parois latérales présentant les inserts pris en masse dans le béton selon la première possibilité, ou encore les cavités de fixation réalisées dans la masse des modules préfabriqués selon la seconde possibilité,
- des moyens de fixation amovibles entre les inserts de fixation et les arbres support selon la première possibilité, ou encore entre les cavités de fixation et les arbres support selon la seconde possibilité configurés pour assurer la fixation des arbres support des éléments de guidage aux inserts de fixation prédisposés dans les modules préfabriqués des parois latérales en béton selon la première possibilité, ou encore configurés pour assurer la fixation des arbres support des éléments de guidage aux cavités de fixation des modules préfabriqués des parois latérales en béton, et dans lequel procédé :
- on obtient les parois latérales, voire de fond formant l'enceinte de convoyage par assemblage des modules préfabriqués en béton, y compris la section supérieure de l'enceinte de convoyage présentant l'écartement entre les parois latérales inférieur à l'écartement des parois latérales portant les inserts ou les cavités de fixation servant à la fixation des éléments de guidage de la bande convoyeuse, la section supérieure de l'enceinte de convoyage étant configurée pour former le conduit, de largeur inférieure à la bande convoyeuse, et centré par rapport à l'axe longitudinal de la bande, des bavettes s'étendant respectivement à partir des deux parois latérales de la section supérieure vers le bas, en réalisant une étanchéité avec les bords longitudinaux du brin supérieur de la bande convoyeuse,
- on fixe les éléments de guidages, directement aux inserts des modules préfabriqués en béton, grâce aux moyens de fixation amovibles, ou encore directement aux cavités de fixation.

L'invention concerne encore un procédé de fabrication d'une installation conforme à l'invention dans lequel :
- on réalise un coffrage, en particulier disposé dans une tranchée, ledit coffrage étant destiné pour la réalisation des parois latérales en béton de l'enceinte, voire d'une paroi de fond en béton joignant les parois latérales, comprenant les inserts de fixation maintenus dans le coffrage destiné à la réalisation des parois latérales,
- on coule le béton dans le coffrage, et obtenant après séchage du béton les parois latérales avec inserts, et le cas échéant la paroi de fond, y compris la section supérieure (11) de l'enceinte de convoyage présentant l'écartement (E2) entre les parois latérales (3,4), inférieur à l'écartement (E1) des parois latérales (3,4) portant les inserts (7) ou les cavités de fixation servant à la fixation des éléments de guidage (6a,6b,6c) de la bande convoyeuse, la section supérieure (11) de l'enceinte de convoyage étant configurée pour former un conduit, de largeur inférieure à la bande convoyeuse (5), et centré par rapport à l'axe longitudinal de la bande,
- on solidarise les arbres supports des éléments de guidage de la bande convoyeuse aux inserts noyés dans les parois latérales de la tranchée par la mise en œuvre des moyens de fixation amovibles.

Selon un mode de réalisation, le procédé de fabrication est obtenu à partir d'un kit convenant pour la réalisation d'une installation selon l'invention, comprenant :
- une bande convoyeuse,
- un ensemble d'éléments de guidage comprenant chacun un arbre support,
- un ensemble d'enveloppe plastique portant des inserts de fixation convenant pour servir d'éléments de coffrage pour le coulage de béton des parois latérales,
- des moyens de fixation amovibles entre les inserts de fixation et les arbres support configurés pour assurer la fixation des arbres support des éléments de guidage aux inserts de fixation,
et dans lequel procédé on utilise les enveloppes plastiques (30, 40) portant les inserts de fixation comme élément de coffrage pour le moulage des parois latérales (3,4) en béton de l'enceinte de convoyage (Ec).

L'invention sera mieux comprise à la lecture de la description suivante accompagnée des figures en annexe parmi lesquelles :
- La figure 1 est une vue de coupe, selon un plan, vertical, illustrant plus particulièrement l'enceinte de convoyage avec ses parois béton, en sur-profondeur du sol, par exemple d'un bâtiment où évoluent des animaux, ainsi que le convoyeur à bandes dont les éléments de guidage de la bande, tels que des rouleaux sont solidarisés directement à des inserts dans les parois latérales en béton,
- La figure 2 est une vue d'un module préfabriqué en béton d'un kit conforme à l'invention selon un mode de réalisation,
- La figure 3 est une vue d'un mode de fixation entre l'insert et un arbre support, télescopique, par déploiement de l'arbre télescopique jusqu'à ce que les extrémités longitudinales de l'arbre support télescopique pénètrent dans des cavités complémentaires de l'insert,
- La figure 3a est une vue de détail de la figure 3 illustrant le verrouillage de la position déployée de l'arbre télescopique dans un insert de la paroi latérale,
- La figure 4 est une vue de détail d'un autre mode de fixation entre l'insert et l'arbre de fixation, opéré par la mise en biais de l'arbre support et la pénétration de son extrémité dans une rainure d'engagement de l'insert, puis son coulissement le long de la rainure d'engagement jusqu'à une rainure de blocage de l'insert,

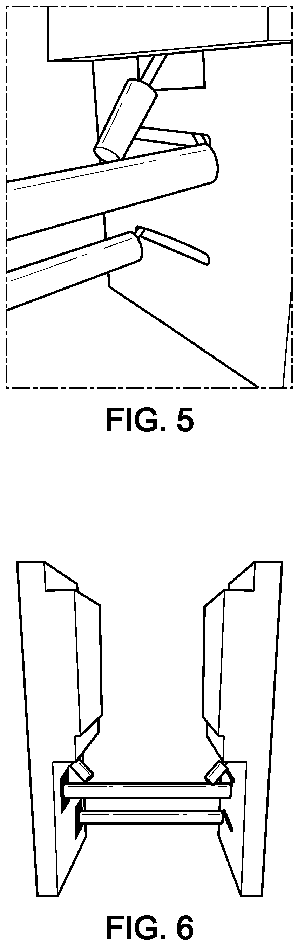

- Les figures 5 et 6 sont des photos de modules préfabriqués en béton conformes au kit selon l'invention,
- La figure 7 est une vue de coupe selon un plan vertical, les parois latérales en béton de l'enceinte recouvertes intérieurement d'une enveloppe plastique portant des inserts de fixation,
- La figure 7a est une vue de détail d'une enveloppe plastique qui servira avantageusement d'élément de coffrage lors de la fabrication (lors du coulage et du moulage des parois en béton), et qui sera avantageusement conservée à demeure pour former une paroi de finition de l'enceinte de convoyage.

Aussi l'invention concerne une installation 1 convenant pour le transport de matière (tel que matière solide, liquide, des poudres...).

L'installation comprend :
- des parois latérales en béton 3,4, voire une paroi de fond joignant les parois latérales, formant une enceinte de convoyage Ec,
- un convoyeur 2 à bande ménagé dans l'enceinte de convoyage Ec ledit convoyeur présentant une bande convoyeuse 5, souple, et un ou plusieurs éléments de guidage 6a, 6b, 6c convenant pour le guidage et/ou le soutien de la bande convoyeuse 5, les éléments de guidage présentant des arbres support 60.

De manière générale, l'enceinte de convoyage Ec peut être disposée au-dessous du niveau du sol, dans une tranchée T. A titre d'exemple non limitatif, la tranchée peut être ménagée au-dessous du sol d'un bâtiment destiné à des animaux.

Une telle tranchée T est ainsi pratiquée en dessous du sol où évoluent les animaux. Les excréments peuvent être facilement poussés jusqu'à une ouverture du sol, au droit de la tranchée T, par laquelle les excréments chutent sur la bande convoyeuse 5.

Cette bande convoyeuse 5 est motorisée de façon bien connue par l'homme du métier, et afin de permettre par exemple l'évacuation des déchets : cette bande convoyeuse 5 forme une boucle avec un brin supérieur 5b destiné à supporter les matières, et un brin inférieur 5a.

Tout ou partie des éléments de guidage 6a, 6b, 6c peuvent être des rouleaux, ledit rouleau étant monté rotatif par rapport à l'arbre support 60, et destiné à entrer en contact roulant avec la paroi interne de la bande convoyeuse 5. Les éléments de guidage 6a, 6b, 6c peuvent encore être, au moins en partie, constitués simplement par les arbres support 60, en contact glissant avec la bande convoyeuse 5 lors de son avancement.

De manière notable et selon une première possibilité de l'invention, des inserts de fixation 7 sont noyés dans le béton des parois latérales 3,4 de l'enceinte, et les extrémités longitudinales El des arbres 60 sont reçues dans les inserts 7. Ces inserts 7 peuvent être typiquement en métal, obtenus notamment par moulage.

Alternativement, et selon une seconde possibilité, des cavités de fixation sont pratiquées dans la masse des parois latérales en béton et les extrémités longitudinales E1 des arbres 60 sont reçues dans ces cavités. Ces cavités de fixation peuvent être obtenues lors du moulage du béton, ou encore par enlèvement de matière.

L'installation présente encore, selon la première possibilité, des moyens de fixation amovibles entre les inserts de fixation 7 et les arbres support 60 configurés pour assurer la fixation des arbres support 60 des éléments de guidage 6a, 6b, 6c (directement) aux inserts de fixation 7 prédisposés dans les parois latérales 3,4 en béton. Inversement, ces moyens de fixation amovibles sont encore configurés pour le retrait des arbres support 60 des inserts de fixation 7.

Alternativement, selon la seconde possibilité, l'installation présente des moyens de fixation amovibles entre les cavités de fixation et les arbres support 60 configurés pour assurer la fixation des arbres support 60 des éléments de guidage 6a, 6b, 6c (directement) aux cavités de fixation des parois latérales 3,4 en béton. Inversement, ces moyens de fixation amovibles sont encore configurés pour le retrait des arbres support 60 des cavités de fixation.

L'invention permet avantageusement de fixer les arbres support 60 des éléments de guidage 6a, 6b, 6c directement aux inserts 7 noyés dans les parois latérales en béton de la tranchée selon la première possibilité, ou encore directement aux cavités de fixation des parois latérales selon la seconde possibilité. Autrement dit, la structure de châssis typiquement métallique connue de l'état de la technique pour le soutien des éléments de guidage est inutile et donc supprimée, libérant la cavité de l'enceinte de cette structure. Seuls les éléments de guidage aux extrémités de châssis peuvent nécessiter un châssis métallique, avec la présence d'un châssis de tête, et un châssis de queue, respectivement aux deux extrémités du convoyeur. Le châssis de tête et/ou le châssis de queue peuvent être motorisé(s).

On remarque encore que les moyens de fixation amovibles entre les inserts 7 et les arbres support 60 selon la première possibilité, ou encore entre les cavités de fixation et les arbres support, selon la seconde possibilité permettent un démontage aisé du convoyeur à bande 2 en cas de maintenance.

Les éléments de guidage 6a, 6b, 6c peuvent comprendre des éléments de guidage 6a, 6b sensiblement horizontaux, les deux extrémités de l'arbre support 60 de chacun des éléments de guidage horizontaux étant reçues de manière amovible, dans deux des inserts 7 appartenant aux deux parois latérales 3,4 selon la première possibilité, ou encore dans deux cavités de fixation en sur profondeur des parois latérales en béton, selon la seconde possibilité.

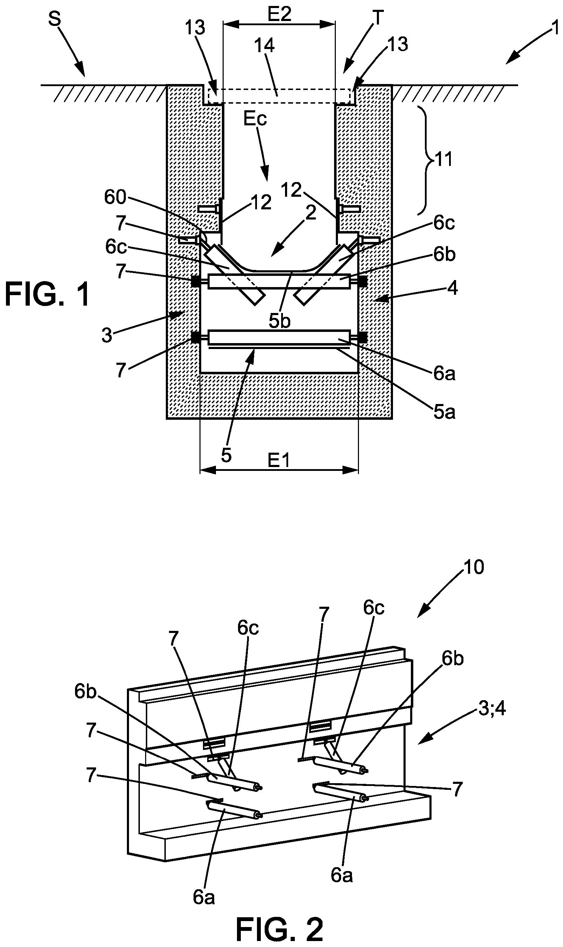

On remarque ainsi de la figure 1 que l'installation comprend un élément de guidage 6a horizontal, inférieur, notamment un rouleau, pour le guidage du brin inférieur 5a de la bande convoyeuse 5, et un élément de guidage 6b horizontal, supérieur, notamment un rouleau inférieur, pour le guidage du brin supérieur 5b de la bande convoyeuse. Les deux extrémités de l'élément de guidage 6a ou 6b sont reçues dans deux inserts 7 selon la première possibilité (ou dans les deux cavités de fixation selon la seconde possibilité) appartenant aux parois latérales en béton, l'axe de l'élément de guidage sensiblement typiquement perpendiculaire aux parois, au moins localement.

Les inserts 7 peuvent être partiellement noyés dans le béton, et de sorte que la partie complémentaire destinée à la fixation de l'arbre support 60 soit saillante de la paroi latérale 3,4. Alternativement, et selon un mode de réalisation avantageux, les inserts 7 peuvent être entièrement noyés dans le béton des parois latérales, sans partie saillante de la paroi latérale, à savoir les inserts sensiblement affleurant à la paroi latérale, et comme illustré aux exemples des figures.

Plusieurs modes de fixation du type amovible peuvent être envisagés. Les différents modes de fixation décrits par la suite sont seulement donnés à titre indicatif, et ne limitent en aucun cas l'invention.

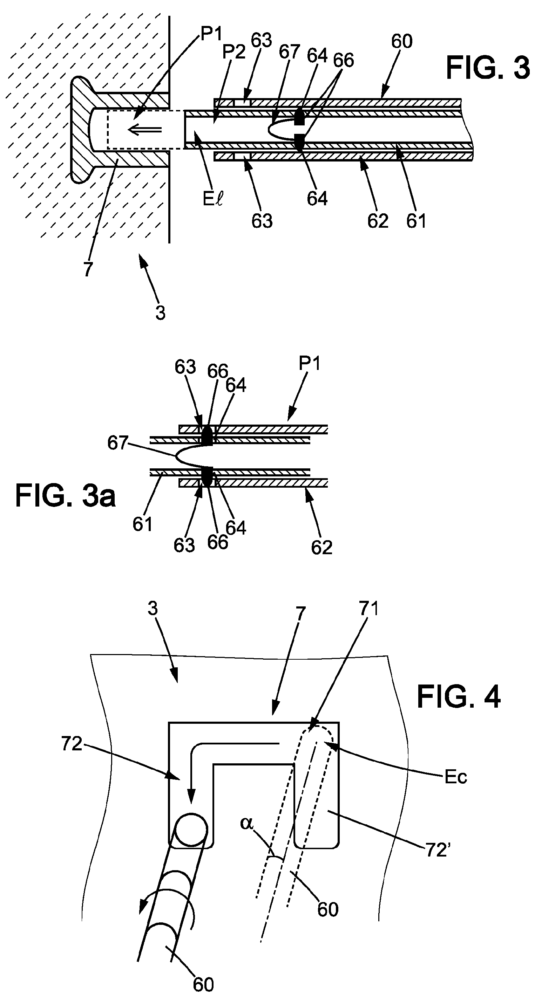

Selon une première possibilité, illustré à titre indicatif à la figure 3, ledit arbre support 60 de l'élément de guidage horizontal 6a, 6b est télescopique, pouvant passer d'une position déployée P1 (illustrée en pointillées) configurée pour assurer la fixation des deux extrémités longitudinales El de l'arbre support 60 respectivement dans deux inserts de fixation 7 selon la première possibilité (ou deux cavités de fixation selon la seconde possibilité) appartenant aux deux parois latérales 3,4 de l'enceinte de convoyage vers une position rétractée P2. Cette position rétractée P2 (illustrée en trait plein) convient pour dégager les extrémités longitudinales El de l'arbre support 60 des inserts de fixation (ou des cavités de fixation), permettant ainsi le retrait de l'élément de guidage 6a ; 6ab. Ledit arbre support 60 est encore équipé d'un moyen de verrouillage dans sa position déployée P1.

On remarque que cette solution de fixation, reposant sur le déploiement d'un arbre télescopique peut être compatible avec des inserts 7 prévus entièrement noyés dans les parois latérales, et comme visible à la figure 3. Dans la position déployée P1, la longueur de l'arbre support 60 est alors supérieure à l'écartement entre les parois latérales de la tranchée T, au moins localement au niveau des inserts. Dans la position rétractée, la longueur de l'arbre support 60 est inférieure à l'écartement entre les parois latérales 3,4.

Ledit arbre support 60 télescopique peut comprendre au moins deux sections tubulaires 61,62 télescopiques, présentant des orifices 63, 64 appartenant respectivement aux deux sections tubulaires 61,62 qui sont configurés pour être en regard dans ladite position déployée P1 de l'arbre support 60 : le moyen de verrouillage est alors configuré pour traverser les orifices en regard des orifices 63,64 pour assurer le verrouillage de l'arbre support 60 dans ladite position déployée P1, et comme illustré à titre d'exemple à la figure 2a.

Plus particulièrement, les deux sections tubulaires comprenant respectivement un tube intérieur 61 et un tube extérieur 62. Le moyen de verrouillage peut comprendre deux plots 66 traversant les orifices 64 dudit tube intérieur 61, ainsi qu'une lame ressort 67 contraignant les plots 66 à s'écarter l'un de l'autre.

Ce moyen de verrouillage est intérieur au tube intérieur 61 : il est configuré de manière à assurer le verrouillage automatique de la position déployée P1 lorsque les orifices 64 du tube intérieur 61 sont mis en regard avec les orifices 63 du tube extérieur 62. Les plots 66 traversant les orifices 64 du tube intérieur sont contraints automatiquement par la lame ressort 67 à pénétrer simultanément les orifices 63 du tube extérieur 62.

Selon un autre mode de réalisation illustré à titre indicatif à la figure 4 ledit arbre support 60 de l'élément de guidage horizontal 6a, 6b est configuré pour assurer la fixation des deux extrémités longitudinales El de l'arbre support 60 respectivement dans deux inserts de fixation 7 selon la première possibilité (ou deux cavités de fixation selon la seconde possibilité) appartenant aux deux parois latérales 3,4 de l'enceinte Ec, et sans changement de la longueur de l'arbre 60. A cet effet au moins l'un des deux inserts de fixation 7 (ou encore l'une des cavités de fixation) comprend une rainure d'engagement 71 et au moins une rainure de blocage 72, 72', par exemple une rainure d'engagement 71, sensiblement horizontale, et une rainure de blocage 72 s'étendant verticalement.

La rainure de blocage 72 et la rainure d'engagement 71 forment une rainure en L couché. Dans le cas où l'insert (ou la cavité) présente une deuxième rainure de blocage 72', les deux rainures de blocage 72 et 72' et la rainure d'engagement 71 forment une rainure en U inversée.

Une telle conception permet la fixation d'un arbre support 60 de longueur éventuellement supérieure à l'écartement entre les parois latérales.

Ces deux rainures 71 et 72 sont configurées de manière à permettre :
- l'insertion de l'extrémité longitudinale de l'arbre support 60 dans la rainure d'engagement 71 de l'un des deux inserts 7 (ou de l'une des deux cavités de fixation), ledit arbre support 60 alors en biais (comme illustré en pointillés à la figure 4), c'est à dire non perpendiculaire à la paroi latérale, et alors que l'autre extrémité longitudinale de l'arbre support 60 est prédisposée dans l'autre insert (au l'autre cavité de fixation) de la paroi latérale 4 opposée, puis,
- le coulissement de l'extrémité longitudinale El de l'arbre support le long de la rainure d'engagement 71 et jusqu' au blocage de l'extrémité dans la rainure de blocage 72.

L'intérêt d'une rainure en U à rainures de blocage 72 et 72' double est de permettre le positionnement de l'arbre support 60 dans l'une choisie des deux rainures de blocage, et avantageusement en fonction de son sens de rotation : par exemple à la figure 4 on positionne l'arbre support 60 destiné à tourner dans le sens antihoraire dans la rainure de blocage à gauche. On évite ainsi que la rotation de l'arbre ne provoque un retrait accidentel sous l'effet des frottements. Ces arbres support 60 seraient ainsi positionnés dans la rainure de blocage 72' à droite, si le sens de rotation était inversé.

Ces deux modes de fixation illustrés aux figures 3 et 4 permettent avantageusement de fixer un arbre support 60 (de longueur fixe) à deux inserts 7 entièrement noyés dans les parois latérales, ou encore de fixer l'arbre support 60 (de longueur fixe) aux cavités de fixation des deux parois latérales.

Dans le cas où les inserts 7 présentent des parties saillantes des parois latérales (mode de réalisation non illustré), d'autres moyens de fixation peuvent être envisagés tels que systèmes vis/écrou, goupilles. Les arbres support 60 des éléments de guidage horizontaux 6a, 6b peuvent être de longueur légèrement inférieure à l'écartement entre les parois latérales 3,4, et de manière à ce que les extrémités longitudinales de chaque arbre support 60 se fixent sur les parties saillantes des inserts 7.

L'installation peut encore comprendre des éléments de guidage 6c inclinés par rapport à l'horizontale et coopérant avec la bande afin de relever ses bords longitudinaux, l'arbre support de l'élément de guidage 6c étant incliné et par exemple maintenu en porte à faux, solidaire d'un insert 7 d'une paroi latérale 3 ; 4. Ces éléments de guidage 6c, inclinés par rapport à l'horizontale, permettent de relever les deux bords longitudinaux du brin supérieur 5b de la bande souple 5. La section du brin supérieur 5b présente alors avantageusement un profil en forme de berceau, à savoir un profil concave favorable au maintien de la matière à transporter sur la bande convoyeuse 5 résultant de la coopération de l'élément de guidage horizontal 6b, et de deux éléments de guidage 6c inclinés solidaires respectivement des deux parois latérales 3,4 de la tranchée.

Les moyens de fixation amovibles entre l'arbre support de l'élément de guidage 6c incliné peuvent par exemple être des moyens de vissage entre l'arbre support 60 incliné et l'insert 7. Alternativement, les moyens de fixation amovibles peuvent être une fixation baïonnette entre l'arbre support 60 et l'insert 7.

On remarque encore que la section supérieure 11 de l'enceinte de convoyage présente et un écartement E2 entre les parois latérales 3,4, inférieur à l'écartement E1 des parois latérales 3,4 portant les inserts 7 (ou les cavités de fixation) servant à la fixation des éléments de guidage 6a,6b,6c de la bande convoyeuse.

La section supérieure 11 de ladite enceinte de convoyage est alors configurée pour former un conduit, de largeur inférieure à la bande convoyeuse 5, ledit conduit étant centré par rapport à l'axe longitudinal de la bande convoyeuse 5. Des bavettes 12 peuvent s'étendre respectivement à partir des deux parois latérales de la section supérieure 11 vers le bas, en réalisant respectivement une étanchéité avec les deux bords longitudinaux du brin supérieur 5b de la bande convoyeuse 5.

On remarque encore que les extrémités supérieures des parois latérales 3, 4 peuvent présenter des épaulements 13 destinés à constituer un siège pour la pose d'une plaque de fermeture 14 en appui par deux de ses bords sur les épaulements 13. Cette plaque de fermeture 14 peut être mise en place à demeure au droit de l'enceinte de convoyage dont on désire fermer l'ouverture supérieure. La plaque 14 peut encore être celle d'une trappe, mobile, notamment en coulissement ou en pivot, que l'on peut ouvrir lorsque qu'il devient nécessaire de faire chuter la matière dans la tranchée, en vue de son évacuation.

On remarque encore que les surfaces intérieures des parois latérales en béton 3,4 formant l'enceinte de convoyage peuvent être recouvertes d'une enveloppe plastique 30, 40.

Ces enveloppes plastiques, recouvrant le béton faciliteront le nettoyage des parois latérales interne de l'enceinte de convoyage, et par comparaison à des parois nues en béton. Cette enveloppe plastique présentera comme autre intérêt majeur de pouvoir servir d'élément de coffrage pour le moulage des parois intérieures en béton, formant une enceinte de convoyage, y compris le moulage des différentes fonctions (épaulement 13 pour la plaque de couvercle, et les différents écartements E1, E2 entre la section supérieure 11 et la section inférieure de l'enceinte de convoyage).

De manière avantageuse, les inserts de fixation 7 sont portés par les enveloppes plastiques, par exemple formés par les enveloppes plastiques 30,40, par des conformations locales de ces dernières. Alternativement les inserts de fixation 7 sont formés par des éléments, distincts des enveloppes plastiques 30,40, solidarisés aux enveloppes plastiques 30,40.

L'invention concerne encore procédé de réalisation d'une installation conforme à l'invention à partir d'un kit comprenant:
- une bande convoyeuse 5,
- un ensemble d'éléments de guidage 6a, 6b, 6c comprenant chacun un arbre support 60,
- un ensemble de modules préfabriqués béton configurés pour la construction des parois latérales 3, 4 de la tranchée, voire même de la paroi de fond de la tranchée, les modules préfabriqués 10 en béton destinés à la réalisation des parois latérales 3,4 présentant les inserts 7 pris en masse dans le béton selon la première possibilité, ou encore des cavités de fixation selon la seconde possibilité,
- des moyens de fixation amovibles entre les inserts de fixation 7 et les arbres support 60 selon la première possibilité, ou encore entre les cavités de fixation et les arbres support 60 selon la seconde possibilité, configurés pour assurer la fixation des arbres support 60 des éléments de guidage 6a, 6b, 6c aux inserts de fixation 7 prédisposés dans les modules préfabriqués 10 des parois latérales 3,4 en béton, selon la première possibilité, ou encore configurés pour assurer la fixation des arbres support 60 des éléments de guidage 6a, 6b, 6c aux cavités de fixations des modules préfabriqués 10 des parois latérales 3,4 en béton.

Ce kit permet la fabrication d'une installation conforme à l'invention, par exemple après réalisation d'une excavation pour la tranchée T.

Les parois latérales, voire de fond formant l'enceinte de convoyage Ec sont obtenues aisément essentiellement par assemblage des modules préfabriqués en béton.

Il est ensuite possible de fixer les éléments de guidages 6a, 6b, 6c, directement aux inserts des modules, grâce aux moyens de fixation amovibles, ou encore directement aux cavités de fixation.

Il est encore possible d'obtenir une telle installation avec la réalisation d'un coffrage sur site et avec coulage de béton.

L'invention concerne ainsi un procédé de fabrication d'une installation à l'invention dans lequel :
- éventuellement on crée une tranchée T sous le sol par exemple d'un bâtiment destiné au logement des animaux destiné à recevoir les parois latérales en béton de l'enceinte de convoyage,
- on réalise un coffrage, le cas échéant disposé dans la tranchée, ledit coffrage étant destiné pour la réalisation des parois latérales béton formant l'enceinte de convoyage, voire d'une paroi de fond en béton joignant les parois latérales, et les inserts de fixation 7 étant prédisposés dans le coffrage destiné à la réalisation des parois latérales,
- on coule le béton dans le coffrage, et, obtenant après séchage du béton les parois latérales 3,4 avec inserts 7 noyés, et le cas échéant la paroi de fond,
- éventuellement on retire le coffrage,
- on solidarise les arbres supports 60 des éléments de guidage 6a, 6b, 6c de la bande convoyeuse 5 aux inserts 7 noyés dans les parois latérales 3,4 de la tranchée T par la mise en œuvre des moyens de fixation amovibles.

Le coffrage peut être un coffrage destiné à être retiré après séchage des parois en béton, ou encore un coffrage destiné à rester à demeure dans la tranchée.

L'invention concerne ainsi un procédé à partir d'un kit convenant pour la réalisation d'une installation selon l'invention par la mise en œuvre du procédé tel que décrit ci-dessus, ledit kit comprenant :
- une bande convoyeuse 5,
- un ensemble d'éléments de guidage 6a, 6b, 6c comprenant chacun un arbre support 60,
- un ensemble d'enveloppe plastique 30,40, portant des inserts de fixation 7 convenant pour servir d'éléments de coffrage pour le coulage de béton des parois latérales de l'enceinte.
- des moyens de fixation amovibles entre les inserts de fixation 7 et les arbres support 60 configurés pour assurer la fixation des arbres support 60 des éléments de guidage 6a, 6b, 6c aux inserts de fixation 7 prédisposés dans les modules préfabriqués 10 des parois latérales 3,4 en béton.

Chaque enveloppe plastique 30 ou 40 peut être en pratique obtenue par la réunion de plusieurs éléments.

Comme illustrées les enveloppes plastiques 30, 40 portant les inserts de fixation seront, lors de la mise en œuvre du procédé utilisées comme élément de coffrage pour le moulage des parois latérales 3,4 en béton de l'enceinte de convoyage Ec.

Comme déjà évoqué, l'invention permet avantageusement de fixer directement les arbres support 60 des éléments de guidage 6a, 6b, 6c aux inserts 7 noyés dans les parois latérales en béton de la tranchée. Autrement dit, la structure de châssis typiquement métallique connue de l'état de la technique pour le soutien des éléments de guidage sur toute la longueur du convoyeur est inutile et donc supprimée, libérant la cavité de la tranchée de cette structure, à l'exception des extrémités longitudinales du convoyeur qui peuvent comprendre respectivement un châssis de tête et un châssis de queue, en particulier motorisé(s).

### NOMENCLATURE

1. Installation,
2. Convoyeur à bande,
3,4. Parois latérales béton de la tranchée,
30, 40. Enveloppes plastiques
5. Bande convoyeuse,
5a. Brin inférieur de la bande souple,
5b. Brin supérieur de la bande souple,
6a. Elément de guidage horizontal : rouleaux de guidage et de soutien, sensiblement horizontal (pour le guidage et le soutien du brin inférieur de la bande convoyeuse),
6b. Elément de guidage horizontal : rouleaux de guidage, sensiblement horizontal (pour le guidage du brin supérieur de la bande convoyeuse),
6c. Elément de guidage horizontal incliné : rouleaux de guidage incliné destiné au relevage des bords longitudinaux de la bande souple,
7. Inserts de fixation,
71, 72. Respectivement rainure d'engagement et rainure de blocage de l'insert,
60. Arbres support (rouleaux 6a, 6b, 6c),
61,62. Tube intérieur et tube extérieur de deux sections télescopiques de l'arbre support,
63,64. Orifices du tube intérieur et du tube extérieur pour le verrouillage de l'arbre télescopique dans sa position déployée P1 (Figure 2a),
66, 67. Plots de verrouillage et lame ressort (Figure 2a),
10. Module préfabriqué béton,
11. Section supérieure de ladite enceinte de convoyage,
12. Bavettes réalisant une étanchéité entre les parois latérales de la section supérieure 11 de la tranchée et la bande convoyeuse 5,
13. Epaulements destinés à constituer un siège pour une plaque 14 obturant l'ouverture de la tranchée,
14. Plaque de fermeture,
Ec. Enceinte de convoyage,
El. Extrémité longitudinale (Arbre support),
E1. Ecartement entre les parois latérales portant les inserts 7,
E2. Ecartement entre les parois latérales sur la section 11,
P1. Position déployée de l'arbre télescopique,
P2. Position rétractée de l'arbre télescopique,
T. Tranchée.

## Revendications

1. Installation (1) convenant pour le transport de matières comprenant :
- des parois latérales en béton (3,4), voire une paroi de fond joignant les parois latérales formant entre elles une enceinte de convoyage (Ec),
- un convoyeur (2) à bande ménagé dans ladite enceinte de convoyage, ledit convoyeur présentant une bande convoyeuse (5), souple, et un ou plusieurs éléments de guidage (6a, 6b, 6c) convenant pour le guidage et/ou le soutien de la bande convoyeuse (5), les éléments de guidage présentant des arbres support (60)
et dans laquelle ladite installation comprend des inserts de fixation (7) noyés dans le béton des parois latérales (3,4) selon une première possibilité, les extrémités longitudinales (El) des arbres (60) étant reçues dans les inserts (7) selon la première possibilité,
- des cavités de fixation (7) creusées dans la masse des parois latérales (3,4), selon une seconde possibilité, les extrémités longitudinales (El) des arbres (60) étant reçues dans les cavités de fixation selon la seconde possibilité,
- des moyens de fixation amovibles entre, d'une part, les inserts de fixation (7) selon la première possibilité ou les cavités de fixation selon la seconde possibilité, et d'autre part, les arbres support (60), lesdits moyens de fixations amovibles étant configurés pour assurer la fixation des arbres support (60) des éléments de guidage (6a, 6b, 6c) aux inserts de fixation (7), prédisposés dans les parois latérales (3,4) en béton selon la première possibilité, ou encore assurer la fixation des arbres support (60) des éléments de guidage (6a, 6b, 6c) aux cavités de fixation selon la seconde possibilité, ou inversement le retrait des arbres support (60) des inserts de fixation (7) selon la première possibilité ou encore le retrait des arbres support des cavités de fixation, selon la seconde possibilité.
- une section supérieure (11) de l'enceinte de convoyage présentant un écartement (E2) entre les parois latérales (3,4), inférieur à l'écartement (E1) des parois latérales (3,4) portant les inserts (7) ou les cavités de fixation servant à la fixation des éléments de guidage (6a,6b,6c) de la bande convoyeuse, la section supérieure (11) de l'enceinte de convoyage étant configurée pour former un conduit, de largeur inférieure à la bande convoyeuse (5), et centré par rapport à l'axe longitudinal de la bande, des bavettes (12) s'étendant respectivement à partir des deux parois latérales de la section supérieure (11) vers le bas, en réalisant une étanchéité avec les bords longitudinaux du brin supérieur (5b) de la bande convoyeuse (5).

2. Installation selon la revendication 1, dans laquelle les éléments de guidage (6a, 6b, 6c) comprennent des éléments de guidage (6a, 6b) sensiblement horizontaux, les deux extrémités de l'arbre support (60) de chacun des éléments de guidage horizontaux étant reçues de manière amovible, dans deux des inserts (7) appartenant aux deux parois latérales (3,4) selon la première possibilité, ou encore dans deux cavités de fixation, selon la seconde possibilité.

3. Installation selon la revendication 2, dans laquelle ledit arbre support (60) de l'élément de guidage horizontal (6a, 6b) est télescopique, pouvant passer d'une position déployée (P1), d'une part, configurée pour assurer la fixation des deux extrémités longitudinales (El) de l'arbre support (60) respectivement dans deux inserts de fixation (7) appartenant aux deux parois latérales (3,4) selon la première possibilité, ou encore respectivement dans deux cavités de fixation des deux parois latérales (3,4) selon la seconde possibilité vers une position rétractée (P2), d'autre part, convenant pour dégager les extrémités longitudinales (El) de l'arbre support (60) des inserts de fixation (7) selon la première possibilité, ou dégager les extrémités longitudinales de l'arbre support (60) des cavités latérales selon la seconde possibilité, permettant ainsi le retrait de l'élément de guidage (6a ; 6b) ledit arbre support (60) présentant un moyen de verrouillage dans sa position déployée (P1).

4. Installation selon la revendication 3, dans laquelle ledit arbre support (60) télescopique comprend deux sections tubulaires (61,62) télescopiques, présentant des orifices (63, 64) appartenant aux deux sections tubulaires (61,62) qui sont configurées pour être en regard dans ladite position déployée (P1) de l'arbre support (60), le moyen de verrouillage étant configuré pour traverser les orifices en regard (63,64) pour assurer le verrouillage de l'arbre support (60) dans ladite position déployée (P1).

5. Installation selon la revendication 4, dans laquelle les deux sections tubulaires comprennent respectivement un tube intérieur (61) et un tube extérieur (62), les moyens de verrouillage comprennent deux plots (66) traversant les orifices (64) dudit tube intérieure (61), ainsi qu'une lame ressort (67) contraignant les plots (66) à s'écarter l'un de l'autre, le moyen de verrouillage étant intérieur au tube intérieur (61) configuré de manière à assurer le verrouillage automatique de la position déployée (P1) lorsque les orifices (64) du tube intérieur (61) sont mis en regard avec les orifices (63) du tube extérieur (62), les plots (66) traversant les orifices (64) du tube intérieur (61) contraints automatiquement par la lame ressort (67) à pénétrer simultanément les orifices (63) du tube extérieur (62).

6. Installation selon la revendication 2, dans lequel ledit arbre support (60) de l'élément de guidage horizontal (6a, 6b) est configuré pour assurer la fixation des deux extrémités longitudinales (61) de l'arbre support (60) respectivement dans deux inserts de fixation (7) appartenant aux deux parois latérales (3,4) selon la première possibilité, ou encore configuré pour assurer la fixation des deux extrémités longitudinales (El) de l'arbre support (60) respectivement dans deux cavités de fixation appartenant aux deux parois latérales et dans lequel au moins l'un des deux inserts de fixation (7) selon la première possibilité, ou au moins l'une des deux cavités de fixation comprend une rainure d'engagement (71) et une rainure de blocage (72) configurées de manière à permettre :
- l'insertion de l'extrémité longitudinale de l'arbre support (60) dans la rainure d'engagement (71) de l'un des deux inserts (7) selon la première possibilité ou l'une des deux cavités de fixation selon la seconde possibilité, ledit arbre support (60) alors en biais, non perpendiculaire à la paroi latérale, et alors que l'autre extrémité longitudinale de l'arbre support (60) est prédisposée dans l'autre insert de la paroi latérale (4) opposé selon la première possibilité, ou prédisposée dans la cavité de fixation de la paroi latérale opposée selon la seconde possibilité, puis,
- le coulissement de l'extrémité longitudinale (El) le long de la rainure d'engagement (71) et jusqu'au blocage de l'extrémité dans la rainure de blocage (72).

7. Installation selon l'une des revendications 1 à 6 comprenant des éléments de guidage (6c) inclinés par rapport à l'horizontale et coopérant avec la bande afin de relever ses bords longitudinaux, l'arbre support de l'élément de guidage (6c) étant incliné et maintenu en porte à faux, solidaire d'un insert d'une paroi latérale (3,4).

8. Installation selon la revendication 7, présentant des inserts (7) selon la première possibilité et dans laquelle les moyens de fixation amovibles entre l'arbre support de l'élément de guidage (6c) incliné sont des moyens de vissage entre l'arbre support (60) et l'insert (7), ou encore une fixation à baïonnette entre l'arbre support (60) et l'insert (7).

9. Installation selon l'une des revendications 1 à 8, dans lequel les inserts (7) sont en plastique ou en métal.

10. Installation selon l'une des revendications 1 à 9 dans laquelle les inserts (7) sont entièrement noyés dans le béton des parois latérales, sans partie saillante de la paroi latérale.

11. Installation selon l'une des revendications 1 à 10, dans lequel les surfaces intérieures des parois latérales en béton (3,4) formant l'enceinte de convoyage sont recouvertes d'une enveloppe plastique (30, 40).

12. Installation selon la revendication 11, dans lequel les inserts de fixation (7) sont formés par les enveloppes plastiques (30,40), par des conformations locales de cette dernière, ou encore les inserts de fixation (7) sont formés par des éléments, distincts des enveloppes plastiques (30,40), solidarisés aux enveloppes plastiques (30,40)

13. Procédé de réalisation d'une installation selon l'une des revendications 1 à 11, à partir d'un kit comprenant :
- une bande convoyeuse (5),
- un ensemble d'éléments de guidage (6a, 6b, 6c) comprenant chacun un arbre support (60),
- un ensemble de modules préfabriqués en béton configurés pour la construction des parois latérales (3, 4) destinées à former l'enceinte de convoyage (Ec), voire même de la paroi de fond de ladite enceinte, les modules préfabriqués (10) en béton destinés à la réalisation des parois latérales (3,4) présentant les inserts (7) pris en masse dans le béton selon la première possibilité, ou encore les cavités de fixation réalisées dans la masse des modules préfabriqués (10) selon la seconde possibilité,
- des moyens de fixation amovibles entre les inserts de fixation (7) et les arbres support (60) selon la première possibilité, ou encore entre les cavités de fixation et les arbres support (60) selon la seconde possibilité configurés pour assurer la fixation des arbres support (60) des éléments de guidage (6a, 6b, 6c) aux inserts de fixation (7) prédisposés dans les modules préfabriqués (10) des parois latérales (3,4) en béton selon la première possibilité, ou encore pour configurer et assurer la fixation des arbres support (60) des éléments de guidage (6a, 6b, 6c) aux cavités de fixations des modules préfabriqués (10) des parois latérales (3,4) en béton, et dans lequel procédé :
- on obtient les parois latérales, voire de fond formant l'enceinte de convoyage (Ec) par assemblage des modules préfabriqués en béton, y compris la section supérieure (11) de l'enceinte de convoyage présentant l'écartement (E2) entre les parois latérales (3,4), inférieur à l'écartement (E1) des parois latérales (3,4) portant les inserts (7) ou les cavités de fixation servant à la fixation des éléments de guidage (6a,6b,6c) de la bande convoyeuse, la section supérieure (11) de l'enceinte de convoyage étant configurée pour former le conduit, de largeur inférieure à la bande convoyeuse (5), et centré par rapport à l'axe longitudinal de la bande, des bavettes (12) s'étendant respectivement à partir des deux parois latérales de la section supérieure (11) vers le bas, en réalisant une étanchéité avec les bords longitudinaux du brin supérieur (5b) de la bande convoyeuse (5),
- on fixe les éléments de guidages (6a, 6b, 6c), directement aux inserts des modules préfabriqués en béton, grâce aux moyens de fixation amovibles, ou encore directement aux cavités de fixation.

14. Procédé de fabrication d'une installation conforme à l'une des revendications 1 à 12 dans lequel :
- on réalise un coffrage, ledit coffrage étant destiné pour la réalisation des parois latérales en béton de l'enceinte de convoyage, voire d'une paroi de fond en béton joignant les parois latérales, comprenant les inserts de fixation (7) maintenus dans le coffrage destiné à la réalisation des parois latérales,
- on coule le béton dans le coffrage, et obtenant après séchage du béton les parois latérales (3,4) avec inserts (7), et le cas échéant la paroi de fond, y compris la section supérieure (11) de l'enceinte de convoyage présentant l'écartement (E2) entre les parois latérales (3,4), inférieur à l'écartement (E1) des parois latérales (3,4) portant les inserts (7) ou les cavités de fixation servant à la fixation des éléments de guidage (6a,6b,6c) de la bande convoyeuse, la section supérieure (11) de l'enceinte de convoyage étant configurée pour former un conduit, de largeur inférieure à la bande convoyeuse (5), et centré par rapport à l'axe longitudinal de la bande,
- on solidarise les arbres supports (60) des éléments de guidage (6a, 6b, 6c) de la bande convoyeuse aux inserts (7) noyés dans les parois latérales (3,4) de la tranchée (T) par la mise en œuvre des moyens de fixation amovibles, et on prévoit des bavettes (12) s'étendant respectivement à partir des deux parois latérales de la section supérieure (11) vers le bas, en réalisant une étanchéité avec les bords longitudinaux du brin supérieur (5b) de la bande convoyeuse (5).

15. Procédé selon la revendication 14, à partir d'un kit convenant pour la réalisation d'une installation selon l'une des revendications 1 à 12, comprenant :
- une bande convoyeuse (5),
- un ensemble d'éléments de guidage (6a, 6b, 6c) comprenant chacun un arbre support (60),
- un ensemble d'enveloppe plastique (30,40) portant des inserts de fixation (7) convenant pour servir d'éléments de coffrage pour le coulage de béton des parois latérales,
- des moyens de fixation amovibles entre les inserts de fixation (7) et les arbres support (60) configurés pour assurer la fixation des arbres support (60) des éléments de guidage (6a, 6b, 6c) aux inserts de fixation (7), et dans lequel procédé on utilise les enveloppes plastiques (30, 40) portant les inserts de fixation comme élément de coffrage pour le moulage des parois latérales (3,4) en béton de l'enceinte de convoyage (Ec).

## Patentansprüche

1. Vorrichtung (1) zum Transport von Materialien, umfassend:
- Seitenwände aus Beton (3, 4) sowie eine Bodenwand, die an die Seitenwände anschließt und mit diesen einen Förderraum (Ec) bildet,
- ein in dem Förderraum angeordnetes Förderband (2), wobei der Förderer ein flexibles Förderband (5) und ein oder mehrere Führungselemente (6a, 6b, 6c) aufweist, die zur Führung und/oder zur Halterung des Förderbands (5) geeignet sind, wobei die Führungselemente Tragwellen (60) aufweisen,
und wobei die Vorrichtung gemäß einer ersten Möglichkeit im Beton der Seitenwände (3, 4) eingebettete Befestigungseinsätze (7) umfasst, wobei die Längsenden (E1) der Wellen (60) gemäß der ersten Möglichkeit in den Einsätzen (7) aufgenommen sind,
- Befestigungsausnehmungen (7), die in das Material der Seitenwände (3, 4) eingearbeitet sind, wobei gemäß einer zweiten Möglichkeit die Längsenden (E1) der Wellen (60) in den Befestigungsausnehmungen gemäß der zweiten Möglichkeit aufgenommen sind,
- lösbare Befestigungsmittel zwischen einerseits den Befestigungseinsätzen (7) gemäß der ersten Möglichkeit oder den Befestigungsausnehmungen gemäß der zweiten Möglichkeit und andererseits den Tragwellen (60), wobei die lösbaren Befestigungsmittel dazu ausgebildet sind, die Befestigung der Tragwellen (60) an den Führungselementen (6a, 6b, 6c) an den Befestigungseinsätzen (7) zu gewährleisten, die in den Beton-Seitenwänden (3, 4) gemäß der ersten Möglichkeit vorgesehen sind, oder die Befestigung der Tragwellen (60) der Führungselemente (6a, 6b, 6c) an den Befestigungsausnehmungen gemäß der zweiten Möglichkeit oder umgekehrt die Entfernung der Tragwellen (60) aus den Befestigungseinsätzen (7) gemäß der ersten Möglichkeit oder die Entfernung der Tragwellen aus den Befestigungsausnehmungen gemäß der zweiten Möglichkeit zu gewährleisten,
- einen oberen Abschnitt (11) des Förderraums, der einen Abstand (E2) zwischen den Seitenwänden (3, 4) aufweist, der kleiner ist als der Abstand (E1) der Seitenwände (3,4), die die Einsätze (7) oder die Befestigungsausnehmungen zur Befestigung der Führungselemente (6a, 6b, 6c) des Förderbandes tragen, wobei der obere Abschnitt (11) des Förderraums so ausgebildet ist, dass er einen Kanal bildet, dessen Breite geringer ist als die des Förderbandes (5) und in Bezug auf die Längsachse des Bandes zentriert ist, wobei sich von den beiden Seitenwänden des oberen Abschnitts (11) jeweils nach unten Flansche (12) erstrecken, die eine Abdichtung mit den Längsrändern des oberen Strangs (5b) des Förderbandes (5) bilden.

2. Vorrichtung nach Anspruch 1, wobei die Führungselemente (6a, 6b, 6c) im Wesentlichen horizontale Führungselemente (6a, 6b) umfassen, wobei die beiden Enden der Tragwelle (60) jedes der horizontalen Führungselemente lösbar in zwei Einsätzen (7) aufgenommen sind, die gemäß der ersten Möglichkeit zu den beiden Seitenwänden (3, 4) gehören, oder gemäß der zweiten Möglichkeit zu zwei Befestigungsausnehmungen gehören.

3. Vorrichtung nach Anspruch 2, wobei die Tragwelle (60) des horizontalen Führungselements (6a, 6b) teleskopierbar ist und aus einer ausgefahrenen Position (P1) einerseits, die zur Gewährleistung der Befestigung der beiden Längsenden (E1) der Tragwelle (60) jeweils in zwei Befestigungseinsätzen (7) der beiden Seitenwände (3, 4) gemäß der ersten Möglichkeit ausgebildet ist, oder jeweils in zwei Befestigungsausnehmungen der beiden Seitenwände (3, 4) gemäß der zweiten Möglichkeit ausgebildet ist, in eine eingezogene Position (P2) andererseits gelangen kann, die dazu geeignet ist, die Längsenden (E1) der Tragwelle (60) aus den Befestigungseinsätzen (7) gemäß der ersten Möglichkeit zu lösen oder die Längsenden der Tragwelle (60) aus den seitlichen Ausnehmungen gemäß der zweiten Möglichkeit zu lösen, wodurch der Rückzug des Führungselements (6a; 6b) ermöglicht wird, wobei die Tragwelle (60) in ihrer ausgefahrenen Position (P1) eine Verriegelungsvorrichtung aufweist.

4. Vorrichtung nach Anspruch 3, wobei die teleskopierbare Tragwelle (60) zwei teleskopierbare rohrförmige Abschnitte (61, 62) umfasst, die Öffnungen (63, 64) aufweisen, die zu den beiden rohrförmigen Abschnitten (61, 62) gehören und so ausgebildet sind, dass sie in der ausgefahrenen Position (P1) der Tragwelle (60) einander gegenüberliegen (60), wobei die Verriegelungsmittel so ausgebildet sind, dass sie die gegenüberliegenden Öffnungen (63, 64) durchqueren, um die Verriegelung der Tragwelle (60) in der genannten ausgefahrenen Position (P1) zu gewährleisten.

5. Vorrichtung nach Anspruch 4, wobei die beiden rohrförmigen Abschnitte jeweils ein Innenrohr (61) und ein Außenrohr (62) umfassen, wobei die Verriegelungsmittel zwei Markierungen (66) umfassen, die die Öffnungen (64) des Innenrohrs (61) durchqueren, sowie eine Federklinge (67), die die Markierungen (66) voneinander wegdrückt, wobei die Verriegelungsmittel innerhalb des Innenrohrs (61) angeordnet und so ausgebildet sind, dass sie die automatische Verriegelung der ausgefahrenen Position (P1) gewährleisten, wenn die Öffnungen (64) des Innenrohrs (61) mit den Öffnungen (63) des Außenrohrs (62) fluchten, wobei die Markierungen (66), die die Öffnungen (64) des Innenrohrs (61) durchqueren, durch die Federklinge (67) automatisch dazu gezwungen werden, gleichzeitig in die Öffnungen (63) des Außenrohrs (62) einzudringen.

6. Vorrichtung nach Anspruch 2, wobei die Tragwelle (60) des horizontalen Führungselements (6a, 6b) dazu ausgebildet ist, die Befestigung der beiden Längsenden (61) der Tragwelle (60) jeweils in zwei Befestigungseinsätzen (7) der beiden Seitenwände (3, 4) gemäß der ersten Möglichkeit zu gewährleisten, oder dazu ausgebildet ist, die Befestigung der beiden Längsenden (E1) der Tragwelle (60) jeweils in zwei Befestigungsausnehmungen zu gewährleisten, die zu den beiden Seitenwänden gehören, und wobei mindestens eine der beiden Befestigungseinsätze (7) gemäß der ersten Möglichkeit oder mindestens einer der beiden Befestigungsausnehmungen eine Eingriffsnut (71) und eine Sperrnut (72) aufweist, die dazu ausgebildet sind, Folgendes zu ermöglichen:
- das Einführen des Längsendes der Tragwelle (60) in die Eingriffsnut (71) eines der beiden Einsätze (7) gemäß der ersten Möglichkeit oder in eine der beiden Befestigungsausnehmungen gemäß der zweiten Möglichkeit, wobei die Tragwelle (60) dann schräg, nicht senkrecht, zur Seitenwand steht, und während das andere Längsende der Tragwelle (60) in dem anderen Einsatz der gegenüberliegenden Seitenwand (4) gemäß der ersten Möglichkeit oder in der Befestigungsausnehmung der gegenüberliegenden Seitenwand gemäß der zweiten Möglichkeit vorgesehen ist, dann
- das Gleiten des Längsendes (E1) entlang der Eingriffsnut (71) bis zum Blockieren des Endes in der Blockiernut (72).

7. Vorrichtung nach einem der Ansprüche 1 bis 6, umfassend Führungselemente (6c), die gegenüber der Horizontalen geneigt sind und mit dem Band zusammenwirken, um dessen Längsränder anzuheben, wobei die Tragwelle des Führungselements (6c), geneigt ist und freitragend gehalten wird, fest verbunden mit einem Einsatz einer Seitenwand (3, 4).

8. Vorrichtung nach Anspruch 7, die Einsätze (7) gemäß der ersten Möglichkeit aufweist, wobei die lösbaren Befestigungsmittel zwischen der Tragwelle des geneigten Führungselements (6c) Schraubmittel zwischen der Tragwelle (60) und dem Einsatz (7) sind, oder eine Bajonettbefestigung zwischen der Tragwelle (60) und dem Einsatz (7) sind.

9. Vorrichtung nach einem der Ansprüche 1 bis 8, wobei die Einsätze (7) aus Kunststoff oder Metall bestehen.

10. Vorrichtung nach einem der Ansprüche 1 bis 9, wobei die Einsätze (7) vollständig in den Beton der Seitenwände eingebettet sind, ohne dass ein Teil aus der Seitenwand herausragt.

11. Vorrichtung nach einem der Ansprüche 1 bis 10, wobei die Innenflächen der den Förderraum bildenden Betonseitenwände (3, 4) mit einer Kunststoffummantelung (30, 40) überzogen sind.

12. Vorrichtung nach Anspruch 1, wobei die Befestigungseinsätze (7) durch die Kunststoffummantelungen (30, 40) durch lokale Ausformungen derselben gebildet sind oder die Befestigungseinsätze (7) durch von den Kunststoffummantelungen (30, 40) getrennte Elemente gebildet sind, die mit den Kunststoffummantelungen (30, 40) fest verbunden sind.

13. Verfahren zur Herstellung einer Vorrichtung nach einem der Ansprüche 1 bis 11 aus einem Bausatz, umfassend:
- ein Förderband (5),
- eine Gruppe von Führungselementen (6a, 6b, 6c), die jeweils eine Tragwelle (60) umfassen,
- eine Gruppe von vorgefertigten Betonmodulen, die zur Konstruktion der Seitenwände (3, 4) zum Bilden des Förderraums (Ec) oder sogar der Bodenwand des Raums ausgebildet sind, wobei die vorgefertigten Betonmodule (10) zur Konstruktion der Seitenwände (3, 4) gemäß der ersten Möglichkeit mit in das Betonmaterial eingegossenen Einsätzen (7) oder gemäß der zweiten Möglichkeit mit in dem Material der vorgefertigten Module (10) ausgebildeten Befestigungsausnehmungen versehen sind,
- lösbare Befestigungsmittel zwischen den Befestigungseinsätzen (7) und den Tragwellen (60) gemäß der ersten Möglichkeit oder zwischen den Befestigungsausnehmungen und den Tragwellen (60) gemäß der zweiten Möglichkeit, die dazu ausgebildet sind, die Befestigung der Tragwellen (60) der Führungselemente (6a, 6b, 6c) an den in den vorgefertigten Modulen (10) der Beton-Seitenwände (3, 4) vorgesehenen Befestigungseinsätzen (7) gemäß der ersten Möglichkeit zu gewährleisten, oder auch dazu, die Befestigung der Tragwellen (60) der Führungselemente (6a, 6b, 6c) an den Befestigungsausnehmungen der vorgefertigten Module (10) der Beton-Seitenwände auszubilden und zu gewährleisten, wobei in dem Verfahren:
- die Seitenwände bzw. Bodenwände, die den Förderraum (Ec) bilden, durch Zusammenfügen der vorgefertigten Betonmodule einschließlich des oberen Abschnitts (11) des Förderraums, der den Abstand (E2) zwischen den Seitenwänden (3, 4) aufweist, der kleiner ist als der Abstand (E1) der Seitenwände (3,4), die die Einsätze (7) oder Befestigungsausnehmungen zur Befestigung der Führungselemente (6a, 6b, 6c) des Förderbandes tragen, erhalten werden, wobei der obere Abschnitt (11) des Förderraums dazu ausgebildet ist, den Kanal zu bilden, dessen Breite geringer ist als die des Förderbandes (5), und in Bezug auf die Längsachse des Bandes zentriert ist, wobei sich von den beiden Seitenwänden des oberen Abschnitts (11) jeweils nach unten Flansche (12) erstrecken, die eine Abdichtung mit den Längsrändern des oberen Strangs (5b) des Förderbandes (5) bilden,
- die Führungselemente (6a, 6b, 6c) direkt an den Einsätzen der vorgefertigten Betonmodule mit Hilfe von lösbaren Befestigungsmitteln oder direkt an den Befestigungsausnehmungen befestigt werden.

14. Verfahren zur Herstellung einer Vorrichtung nach einem der Ansprüche 1 bis 12, wobei:
- eine Schalung hergestellt wird, die zur Herstellung der Betonseitenwände des Förderraums oder einer an die Seitenwände anschließenden Betonbodenwand bestimmt ist und die Befestigungseinsätze (7) enthält, die in der zur Herstellung der Seitenwände bestimmten Schalung gehalten werden,
- Beton in die Schalung gegossen wird und nach dem Trocknen des Betons die Seitenwände (3, 4) erhalten werden, mit Einsätzen (7) und gegebenenfalls die Bodenwand einschließlich des oberen Abschnitts (11) des Förderraums, der den Abstand (E2) zwischen den Seitenwänden (3, 4) aufweist, der kleiner ist als der Abstand (E1) der Seitenwände (3, 4), die die Einsätze (7) tragen, oder die Befestigungsausnehmungen, die zur Befestigung der Führungselemente (6a, 6b, 6c) des Förderbandes dienen, wobei der obere Abschnitt (11) des Förderraums dazu ausgebildet ist, einen Kanal zu bilden, dessen Breite geringer ist als die Breite des Förderbandes (5) und der in Bezug auf die Längsachse des Bandes zentriert ist,
- die Tragwellen (60) der Führungselemente (6a, 6b, 6c) des Förderbandes mit den in den Seitenwänden (3, 4) des Abschnitts (T) eingebetteten Einsätzen (7) durch den Einsatz von lösbaren Befestigungsmitteln verbunden werden, und jeweils von den beiden Seitenwänden des oberen Abschnitts (11) nach unten verlaufende Flansche (12) vorgesehen sind, die eine Abdichtung mit den Längsrändern des oberen Strangs (5b) des Förderbandes (5) bilden.

15. Verfahren nach Anspruch 14, ausgehend von einem Bausatz, der zur Herstellung einer Vorrichtung nach einem der Ansprüche 1 bis 12 geeignet ist, umfassend:
- ein Förderband (5),
- eine Anordnung von Führungselementen (6a, 6b, 6c), die jeweils eine Tragwelle (60) umfassen,
- eine Kunststoffummantelungsanordnung (30, 40) mit Befestigungseinsätzen (7), die als Schalungselemente zum Gießen von Beton für die Seitenwände dienen können,
- lösbare Befestigungsmittel zwischen den Befestigungseinsätzen (7) und den Tragwellen (60), die dazu ausgebildet sind, die Befestigung der Tragwellen (60) der Führungselemente (6a, 6b, 6c) an den Befestigungseinsätzen (7) zu gewährleisten, und wobei die die Befestigungseinsätze tragenden Kunststoffummantelungen (30, 40) als Schalungselement zum Formen der Beton-Seitenwände (3, 4) des Förderraums (Ec) verwendet werden.

## Claims

1. Installation (1) suitable for the transport of materials, comprising:
- concrete side walls (3, 4), or even a bottom wall joining the side walls forming a conveying enclosure (Ec) between them,
- a belt conveyor (2) housed in said conveying enclosure, said conveyor having a flexible conveyor belt (5), and one or more guiding elements (6a, 6b, 6c) suitable for guiding and/or supporting the conveyor belt (5), the guiding elements having support shafts (60)
and wherein said installation comprises fastening inserts (7) embedded in the concrete of the side walls (3, 4) according to a first possibility, the longitudinal ends (El) of the shafts (60) being received in the inserts (7) according to the first possibility,
- fastening cavities (7) hollowed into the mass of the side walls (3, 4) according to a second possibility, the longitudinal ends (El) of the shafts (60) being received in the fastening cavities according to the second possibility,
- removable fastening means between on the one hand the fastening inserts (7) according to the first possibility or the fastening cavities according to the second possibility, and on the other hand the support shafts (60), said removable fastening means being configured to secure the support shafts (60) of the guiding elements (6a, 6b, 6c) to the fastening inserts (7), prearranged in the concrete side walls (3, 4) according to the first possibility, or secure the support shafts (60) of the guiding elements (6a, 6b, 6c) to the fastening cavities according to the second possibility, or conversely remove the support shafts (60) from the fastening inserts (7) according to the first possibility or remove the support shafts from the fastening cavities according to the second possibility.
- an upper section (11) of the conveying enclosure having a separation (E2) between the side walls (3.4), less than the separation (E1) of the side walls (3,4) carrying the inserts (7) or the fastening cavities serving to fasten the guiding elements (6a, 6b, 6c) of the conveyor belt, the upper section (11) of the conveying enclosure being configured to form a duct, with a width less than the conveyor belt (5), and centred with respect to the longitudinal axis of the belt, skirts (12) extending respectively from the two side walls of the upper section (11) downwards, making a seal with the longitudinal edges of the upper length (5b) of the conveyor belt (5).

2. Installation according to claim 1, wherein the guiding elements (6a, 6b, 6c) comprise substantially horizontal guiding elements (6a, 6b), the two ends of the support shaft (60) of each of the horizontal guiding elements being removably received, in two of the inserts (7) belonging to the two side walls (3.4) according to the first possibility, or in two fastening cavities according to the second possibility.

3. Installation according to claim 2, wherein said support shaft (60) of the horizontal guiding element (6a, 6b) is telescopic, capable of passing from a deployed position (P1) on the one hand, configured to ensure the attachment of the two longitudinal ends (El) of the support shaft (60) respectively in two attachment inserts (7) belonging to the two side walls (3.4) according to the first possibility, or respectively in two attachment cavities of the two side walls (3,4) according to the second possibility to a retracted position (P2) on the other hand, suitable for leaving clear the longitudinal ends (El) of the support shaft (60) from the fastening inserts (7) according to the first possibility, or leaving clear the longitudinal ends of the support shaft (60) of the lateral cavities according to the second possibility, thus allowing the retraction of the guiding element (6a; 6b), said support shaft (60) having a locking means in its deployed position (P1).

4. Installation according to claim 3, wherein said telescopic support shaft (60) comprises two telescopic tubular sections (61, 62), having orifices (63, 64) belonging to the two tubular sections (61, 62) that are configured to be facing in said deployed position (P1) of the support shaft (60), the locking means being configured to pass through the facing orifices (63, 64) to ensure locking of the support shaft (60) in said deployed position (P1).

5. Installation according to claim 4, wherein the two tubular sections respectively comprise an inner tube (61) and an outer tube (62), the locking means comprise two studs (66) passing through the orifices (64) of said inner tube (61), as well as a spring leaf (67) forcing the studs (66) to move apart from one another, the locking means being internal to the inner tube (61) configured so as to ensure automatic locking of the deployed position (P1) when the orifices (64) of the inner tube (61) are facing the orifices (63) of the outer tube (62), the studs (66) passing through the orifices (64) of the inner tube (61) automatically forced by the spring leaf (67) to simultaneously enter the orifices (63) of the outer tube (62).

6. Installation according to claim 2, wherein said support shaft (60) of the horizontal guide element (6a, 6b) is configured to secure the two longitudinal ends (61) of the support shaft (60) respectively in two fastening inserts (7) belonging to the two side walls (3.4) according to the first possibility, or configured to secure the two longitudinal ends (El) of the support shaft (60) respectively in two fastening cavities belonging to the two side walls and wherein at least one of the two fastening inserts (7) according to the first possibility, or at least one of the two fastening cavities comprises an engagement groove (71) and a locking groove (72) configured so as to enable:
- inserting the longitudinal end of the support shaft (60) into the engagement groove (71) of one of the two inserts (7) according to the first possibility or one of the two fastening cavities according to the second possibility, said support shaft (60) then at an angle, not perpendicular to the side wall, and while the other longitudinal end of the support shaft (60) is pre-disposed in the other insert of the opposite side wall (4) according to the first possibility, or pre-disposed in the fastening cavity of the opposite side wall according to the second possibility, then
- sliding the longitudinal end (El) along the engagement groove (71) and until the end is locked in the locking groove (72).

7. Installation according to one of claims 1 to 6, comprising guiding elements (6c) inclined with respect to the horizontal and cooperating with the belt in order to raise its longitudinal edges, the support shaft of the guide element (6c) being inclined and held in a cantilever, secured to an insert of a side wall (3.4).

8. Installation according to claim 7, having inserts (7) according to the first possibility and wherein the removable fastening means between the support shaft of the inclined guide element (6c) are screwing means between the support shaft (60) and the insert (7), or a bayonet fastening between the support shaft (60) and the insert (7).

9. Installation according to one of claims 1 to 8, wherein the inserts (7) are made of plastics material or metal.

10. Installation according to one of claims 1 to 9, wherein the inserts (7) are fully embedded in the concrete of the side walls, without protruding part of the side wall.

11. Installation according to one of claims 1 to 10, wherein the inner surfaces of the concrete side walls (3, 4) forming the conveying enclosure are covered with a plastic shell (30, 40).

12. Installation according to claim 11, wherein the fastening inserts (7) are formed by the plastic shells (30, 40), by local conformations thereof, or the fastening inserts (7) are formed by elements, separate from the plastic shells (30, 40), secured to the plastic shells (30, 40)

13. Method for producing an installation according to one of claims 1 to 11, from a kit comprising:
- a conveyor belt (5),
- a set of guiding elements (6a, 6b, 6c) each comprising a support shaft (60),
- a set of prefabricated concrete modules configured for the construction of the side walls (3, 4) intended to form the conveying enclosure (Ec), or even the bottom wall of said enclosure, the prefabricated concrete modules (10) intended for the manufacture of the side walls (3, 4) having the inserts (7) solidly incorporated into the concrete according to the first possibility, or the fastening cavities made in the mass of the prefabricated modules (10) according to the second possibility,
- removable fastening means between the fastening inserts (7) and the support shafts (60) according to the first possibility, or between the fastening cavities and the support shafts (60) according to the second possibility, configured to ensure the fastening of the support shafts (60) of the guiding elements (6a, 6b, 6c) to the fastening inserts (7) prearranged in the prefabricated modules (10) of the concrete side walls (3.4) according to the first possibility, or to configure and ensure the attachment of the support shafts (60) of the guiding elements (6a, 6b, 6c) to the attachment cavities of the prefabricated modules (10) of the concrete side walls (3.4), and wherein:
- the side walls, or even the bottom walls forming the conveying enclosure (Ec), are obtained by assembling the prefabricated concrete modules, including the upper section (11) of the conveying enclosure having the separation (E2) between the side walls (3, 4), lower than the separation (El) of the side walls (3, 4) carrying the inserts (7) or the fastening cavities used to fasten the guiding elements (6a, 6b, 6c) of the conveyor belt, the upper section (11) the conveying enclosure being configured to form the duct, of a width less than the conveyor belt (5), and centred with respect to the longitudinal axis of the belt, skirts (12) extending respectively from the two side walls of the upper section (11) downwards, making a seal with the longitudinal edges of the upper length (5b) of the conveyor belt (5),
- the guiding elements (6a, 6b, 6c) are secured directly to the inserts of the prefabricated concrete modules, thanks to the removable fastening means, or even directly to the fastening cavities.

14. Method for manufacturing an installation according to one of claims 1 to 12, wherein:
- formwork is produced, said formwork being intended for making the concrete side walls of the conveying enclosure, or even a concrete bottom wall joining the side walls, comprising the fastening inserts (7) held in the formwork intended for making the side walls,
- the concrete is poured into the formwork, and obtaining, after the concrete is dried, the side walls (3, 4) with inserts (7), and where applicable the bottom wall, including the upper section (11) of the conveying enclosure having the separation (E2) between the side walls (3, 4), less than the separation (E1) of the side walls (3, 4) carrying the inserts (7) or the fastening cavities used to fasten the guiding elements (6a, 6b, 6c) of the conveyor belt, the upper section (11) of the conveying enclosure being configured to form a duct, with a width less than the conveying belt (5), and centred with respect to the longitudinal axis of the belt,
- the support shafts (60) of the guiding elements (6a, 6b, 6c) of the conveyor belt are secured to the inserts (7) embedded in the side walls (3, 4) of the trench (T) by implementing the removable fastening means, and skirts (12) are provided extending respectively from the two side walls of the upper section (11) downwards, making a seal with the longitudinal edges of the upper length (5b) of the conveyor belt (5).

15. Method according to claim 14, from a kit suitable for producing an installation according to one of claims 1 to 12, comprising:
- a conveyor belt (5),
- a set of guiding elements (6a, 6b, 6c) each comprising a support shaft (60),
- a plastic shell assembly (30, 40) carrying fastening inserts (7) suitable for serving as formwork elements for pouring concrete of the side walls,
- removable fastening means between the fastening inserts (7) and the support shafts (60) configured to secure the supporting shafts (60) of the guiding elements (6a, 6b, 6c) to the fastening inserts (7), and in which method the plastic shells (30, 40) carrying the fastening inserts are used as formwork element for moulding the concrete side walls (3.4) of the conveying enclosure (Ec).
